# EUROPEAN PATENT SPECIFICATION

(11) **EP 2 058 890 B1**
(45) Date of publication and mention of the grant of the patent: **01.05.2013**
(21) Application number: 08253575.8
(22) Date of filing: 31.10.2008
(51) Int. Cl.: H01M 10/04, H01M 4/04, H01M 4/72, H01M 2/02

(54) **Electrochemical cells and method of manufacturing same**
Elektrochemische Zellen und Herstellungsverfahren dafür
Cellules électrochimiques et procédé de fabrication correspondant

(30) Priority: 02.11.2007 US 934098
(43) Date of publication of application: 13.05.2009
(73) Proprietor: Greatbatch Ltd., Clarence, NY 14031 (US)
(72) Inventor: Davis, Steven, Cheektowaga, NY 14225 (US); Shah, Ashish, East Amherst, NY 14051 (US); Kaiser, Donald, Clarence Center, NY 14032 (US); Gan, Hong, Williamsville, NY 14221 (US); Takeuchi, Esther S., East Amherst, NY 14051 (US)
(74) Representative: Duckett, Anthony Joseph

(56) References cited:
- EP-A2- 1 207 567
- US-A- 5 744 258
- US-B2- 6 727 022

## Description

### BACKGROUND OF THE INVENTION

### 1. Field of the Invention

The present invention relates generally to an electrochemical cell, and methods for manufacturing an electrochemical cell. More particularly, the present invention relates in one embodiment to an electrochemical cell comprised of a cathode having separate sheets of at least two different cathode active materials that are in contact with but not adhered to each other and/or to a current collector.

### 2. Description of Related Art

Electrochemical cells are widely used in a range of applications. Lithium cells are well known in the prior art and have been used to power implantable medical devices. Some examples of devices include pacemakers, defibrillators, neurostimulators, and drug delivery systems. Cell electrodes for many of these devices are manufactured by preparing a powdered mixture of an electrochemically active material with a binder and a conductive agent. The resulting mixture is then typically spread, coated, or pasted onto a thin metallic sheet used as a current collector. The resulting powder/current collector assembly is pressed at high pressures to compress the active components to an optimum density from both a discharge performance and energy density standpoint. In the case of primary lithium cells, a powdered cathode mixture is spread onto a current collector manufactured from stainless steel, aluminum, titanium, or carbon coated titanium, and the resulting cathode plate is pressed at high pressure in order to obtain the desired cathode material density.

For example, U.S. Pat. No. 5,435,874 to Takeuchi et al., which is assigned to the assignee of the present invention and incorporated herein by reference, teaches a method of manufacturing a cathode component for use in an electrochemical cell from a free-standing sheet of cathode active material. Granular cathode active starting material is comminuted to a desired particle size and mixed with conductive diluents, binder material, and a solvent to form a paste. The paste is fed into rollers to form briquettes that are gravity fed to roll mills to produce the cathode material in a sheet form that is then cut into cathode plates. A cathode current collector is laminated between at least one cathode blank pressed on either side of the current collector.

U.S. Pat. No. 6,174,622 to Thiebolt III et al., which is assigned to the assignee of the present invention and incorporated herein by reference, describes the use of a similar procedure to produce a dry sized cathode blank which is positioned within a hydraulic press together with a cathode screen as well as a second cathode blank. Thereafter, the assembly is pressed to form the electrode.

More recently, sandwich and hybrid cathode designs have been proposed. In this design, multiple cathode component materials are coated, pressed, or coated and then pressed within a single or double current collector design. Typically, these electrochemically active materials are chosen for different but complementary performance parameters, such as a first material having relatively high gravimetric energy density combined with a second material having relatively high discharge rate capability and/or the ability to be recharged by the first material.

For example, U.S. Pat. No. 5,744,258 to Bai et al., the disclosure of which is incorporated herein by reference, discloses a hybrid electrode for a high power, high energy electrical storage device containing both a high-energy electrode material and a high-rate electrode material. The two materials are deposited on a current collector, and the electrode is used to make an energy storage device that exhibits both the high-rate capability of a capacitor and the high energy capability of a battery. The two materials can be co-deposited on the current collector in a variety of ways, either in superimposed layers, adjacent layers, intermixed with each other or one material coating the other to form a mixture that is then deposited on the current collector.

U.S. Pat. No. 6,551,747 to Gan, which is assigned to the assignee of the present invention and incorporated herein by reference, describes a sandwich cathode design having a second cathode active material of a relatively high energy density but of a relatively low rate capability sandwiched between two current collectors and with a first cathode active material having a relatively low energy density but of a relatively high rate capability in contact with the opposite sides of the two current collectors.

U.S. Pat. No. 6,727,022 to Gan et al., which is also assigned to the assignee of the present invention and incorporated herein by reference, describes a cell having a positive electrode formed by positioning a first cathode active material into a pressing fixture and positioning a perforated current collector on top of the first cathode active material. The first cathode active material is in powdered form having particles capable of moving through the openings in the collector screen. A second cathode active material in a form incapable of moving through the openings of the perforated current collector is positioned on top of the current collector screen and the assembly is then pressed from the direction of the second cathode active material to the first cathode active material to form the cathode. That way, the second cathode active material prevents the first cathode active material from moving through the current collector openings to "contaminate" the opposite side thereof.

Combining two or more electrochemically active materials into a single electrode design as described in these patents can be challenging when the materials compact to different densities, compress differently during compaction, or expand at a different rate following compaction. These problems are exacerbated when the cathode design is asymmetrical with respect to the current collector. If the materials are too dissimilar, the final electrode may bow, cup, or delaminate when the dissimilar materials are pressed together on opposite sides of the same current collector. Additionally, the formulation of each active material mix must be optimized with respect to the phenomena occurring during and after the final assembly press. These optimizations may depend upon the amount of material (basis weight) being pressed on each side of the current collector screen.

One solution to the above problem is to independently press one of the materials prior to final pressing and assembly into a finished cathode. This approach can be used to reduce electrode cupping, but is still dependent to some extent on optimizing the pressed density of both materials so that the final electrode assembly maintains structural integrity by holding together.

Therefore, what is needed for an electrochemical cell having a sandwich cathode design is a method for making a cathode that has no or minimal internal stresses that cause.bowing, cupping, or delamination of one or more of the cathode layers.

### SUMMARY OF THE INVENTION

The present invention meets this need and provides an electrochemical cell as disclosed in claims 1 and 8.

In one preferred embodiment, the first cathode active material is a high rate, low energy density cathode material and the second cathode active material is a low rate, high energy density cathode material. The high rate, low energy density cathode material may be silver vanadium oxide (SVO) and the low rate, high energy density cathode material may be fluorinated carbon (CFₓ).

In accordance with the present invention, methods for manufacturing the electrochemical cells are also provided. In one embodiment, the method comprises forming a first sheet of a first cathode active material and a first sheet of a second cathode active material; placing the first sheets of the first cathode active material in non-adherent contact with opposite sides of a first current collector; placing the first sheets of the second cathode active material in non-adherent and congruent contact with the first sheets of the first cathode active material, thereby forming a cathode; assembling the cathode with an anode to form an anode/cathode electrode assembly; housing the electrode assembly in a casing to maintain the congruent contact of the first sheets of the first cathode active material with the first sheets of the second cathode active material; and activating the electrode assembly with an electrolyte.

In another embodiment, the method comprises forming first, second, third and fourth sheets of a first cathode active material and first sheets of a second cathode active material; placing the first and second sheets of the first cathode active material in contact with opposite sides of a first current collector, and the third and fourth sheets of the first cathode active material in contact with opposite sides of a second current collector; placing the first sheets of the second cathode active material in non-adherent and congruent contact with the second and third sheets of the first cathode active material, thereby forming a cathode; assembling the cathode with an anode to form an anode/cathode electrode assembly; housing the electrode assembly in a casing to maintain congruent contact of the second and third sheets of the first cathode active material with the first sheets of the second cathode active material; and activating the electrode assembly with an electrolyte.

The methods may further comprise enveloping the cathodes in a separator dimensioned to maintain congruent contact of the sheets of cathode active materials with the current collectors and/or with each other.

One aspect of the invention is based on the discovery that in manufacturing cathodes and electrochemical cells, if the active electrode materials are assembled in a manner such that they are not adhered to each other and/or to the current collector, then bowing, cupping, and/or delamination of the respective cathode layers is avoided. Damage to the cathode screen due to non-uniformities in pressing during final assembly is also avoided. As a result, the electrochemical cell is dimensionally more precise and more reliable. Thinner or lower strength current collectors may be used, thereby improving the cell's volumetric efficiency.

The foregoing and additional objects, advantages, and characterizing features of the present invention will become increasingly more apparent upon a reading of the following detailed description together with the included drawings.

### BRIEF DESCRIPTION OF THE DRAWINGS

The present invention will be described by reference to the following drawings, in which like numerals refer to like elements, and in which:
FIG. 1 is a perspective view of an electrochemical cell of the present invention;
FIG. 2A is an exploded perspective view of a first cathode that can be used in the cell of FIG. 1;
FIG. 2B is an exploded perspective view of a second cathode that can be used in the cell of FIG. 1;
FIG. 2C is a perspective view of a preferred third cathode that can be used in the cell of FIG. 1;
FIG. 3 is a cross-sectional view of the cell of FIG. 1 taken along line 3-3 therein and including the cathode of FIG. 2C;
FIG. 4 is a side elevation view of a cathode shape with indicia of dimensional measurement points used in testing exemplary cells of the present invention;
FIG. 5 is a plot of cell voltage versus depth of discharge for a first set of exemplary cells including the cathode of FIG. 2A under a pulse discharge protocol;
FIG. 6 is a plot of cell voltage versus depth of discharge for a second set of exemplary cells including the cathode of FIG. 2A under a pulse discharge protocol; and
FIG. 7 is a plot of cell voltage versus depth of discharge for a set of exemplary cells including the cathode of FIG. 2C.

The present invention will be described in connection with preferred embodiments, however, it will be understood that there is no intent to limit the invention to the embodiments described. On the contrary, the intent is to cover all alternatives, modifications, and equivalents as may be included within the spirit and scope of the invention as defined by the appended claims.

### DETAILED DESCRIPTION OF THE PREFERRED EMBODIMENTS

In describing the present invention, the following terms are used.

As used herein, the term "congruent contact" between sheets of disparate cathode materials having a current collector disposed between them is meant to indicate that the cathode material sheets are aligned and in contact with each other, either directly through the perforations in the intermediate current collector or in a side-by-side relationship not having a current collector there between. Preferably, the major surfaces of a first sheet of the first cathode active material and a first sheet of the second cathode active material are of the same size and shape, but that is not necessary.

As used herein, the term "non-adherent contact" between a current collector and a sheet of cathode active material or between sheets of disparate first and second cathode active materials is meant to indicate that major surfaces of the current collector and the sheet of cathode material or the major surfaces of the disparate cathode active materials are touching each other, but are not held together by forces intrinsic to the contact, i.e. strong or weak molecular forces typically referred to as "adhesive" forces. The term "adherent contact" between a current collector and a sheet of cathode material, or between first and second cathode active materials is meant to indicate the opposite, i.e. that major surfaces of the current collector and the sheet of cathode material are touching each other, and are held together by strong or weak molecular forces such as chemical bonds, hydrogen bonds, or Van der Waals forces.

As used herein, the term "major surfaces" refers to the relatively large opposite surfaces of a current collector or a sheet of electrode material. This is in comparison to minor surfaces, which would be the small perimeter or edge surfaces of these objects.

The term "pulse" means a short burst of electrical current of significantly greater amplitude than that of a pre-pulse current or open-circuit voltage immediately prior to the pulse. A pulse train consists of at least one pulse of electrical current. The pulse is designed to deliver energy, power or current. If the pulse train consists of more than one pulse, they are delivered in relatively short succession with or without open circuit rest between the pulses.

In performing accelerated discharge testing of a cell, a pulse train may consist of one or more pulses of a sufficient current magnitude to depress the terminal voltage by about 10% to 50%. An exemplary pulse train may consist of one 5- to 30-second pulses (3 mA/cm²) with about 15 second rest between each pulse. A typically used range of current densities for cells powering implantable medical devices is from about 0.5 mA/cm² to about 5 mA/cm², and more preferably from about 1 mA/cm² to about 3 mA/cm². Typically, a pulse of about ten seconds in duration is suitable for medical implantable applications. However, it could be significantly shorter or longer depending on the specific cell design and chemistry and the associated device energy requirements. Current densities are based on square centimeters of the cathode electrode.

An electrochemical cell that possesses sufficient energy density and discharge capacity required to meet the rigorous requirements of implantable medical devices comprises an anode of lithium. An alternate anode comprises a lithium alloy such as a lithium-aluminum alloy. The greater the amounts of aluminum present by weight in the alloy, however, the lower the energy density of the cell.

The form of the anode may vary, but preferably it is a thin metal sheet or foil of lithium metal, pressed or rolled on a metallic anode current collector, i.e., preferably comprising titanium, titanium alloy or nickel. Copper, tungsten, stainless steel, and tantalum are also suitable materials for the anode current collector. In one embodiment, the anode current collector has an extended tab or lead contacted by a weld to a cell case of conductive metal in a case-negative electrical configuration. Alternatively, the anode may be formed in some other geometry, such as a bobbin shape, cylinder or pellet, to allow for a low surface cell design.

The electrochemical cell of the present invention further comprises a cathode of electrically conductive material that serves as the counter electrode. The cathode is preferably of solid materials having the general formula SMₓV₂O_{y} where SM is a metal selected from Groups IB to VIIB and VIIIB of the Periodic Table of Elements, and wherein x is about 0.30 to 2.0 and y is about 4.5 to 6.0 in the general formula. By way of illustration, and in no way intended to be limiting, one exemplary cathode active material comprises silver vanadium oxide having the general formula AgₓV₂O_{y} in any one of its many phases, i.e., β -phase silver vanadium oxide having in the general formula x = 0.35 and y = 5.8, γ-phase silver vanadium oxide having in the general formula x = 0.80 and y = 5.40 and ε-phase silver vanadium oxide having in the general formula x = 1.0 and y = 5.5, and combination and mixtures of phases thereof.

Another preferred composite transition metal oxide cathode material includes V₂O_{z} wherein z ≤ 5 combined with Ag₂O with silver in either the silver(II), silver(I) or silver(0) oxidation state and CuO with copper in either the copper(II), copper(I) or copper(0) oxidation state to provide the mixed metal oxide having the general formula CuₓAg_{y}V₂O_{z}, (CSVO). Thus, the composite cathode active material may be described as a metal oxide-metal oxide-metal oxide, a metal-metal oxide-metal oxide, or a metal-metal-metal oxide and the range of material compositions found for CuₓAg_{y}V₂O_{z} is preferably about 0.01 ≤ z ≤ 6.5. Typical forms of CSVO are Cu_{0.16}Ag_{0.67}V₂O_{z} with z being about 5.5 and Cu_{0.5}Ag_{0.5}V₂O_{z} with z being about 5.75. The oxygen content is designated by z since the exact stoichiometric proportion of oxygen in CSVO can vary depending on whether the cathode material is prepared in an oxidizing atmosphere such as air or oxygen, or in an inert atmosphere such as argon, nitrogen and helium. For a more detailed description of this cathode active material reference is made to U.S. Pat. Nos. 5,472,810 to Takeuchi et al. and 5,516,340 to Takeuchi et al., both of which are assigned to the assignee of the present invention and incorporated herein by reference.

Other useful cathode active materials include manganese dioxide, titanium disulfide, copper oxide, copper sulfide, iron sulfide, iron disulfide, V₂O₅, LiCoO₂, LiNiO₂, LiMn₂O₄, copper vanadium oxide, Ag₂O, Ag₂O₂, CuF, Ag₂CrO₄, fluorinated carbon, and mixtures thereof. Preferred fluorinated carbon compounds are represented by the formula (CFₓ)ₙ wherein x varies between about 0.1 to 1.9 and preferably between about 0.5 and 1.2, and (C₂F)ₙ wherein the n refers to the number of monomer units which can vary widely.

Before fabrication into an electrode for incorporation into an electrochemical cell, the cathode active material is preferably mixed with a binder material such as a powdered fluoro-polymer, more preferably powdered polytetrafluoroethylene or powdered polyvinylidene fluoride present at about 1 to about 5 weight percent of the cathode mixture. Further, up to about 10 weight percent of a conductive diluent is preferably added to the cathode mixture to improve conductivity. Suitable materials for this purpose include acetylene black, carbon black and/or graphite or a metallic powder such as powdered nickel, aluminum, titanium, stainless steel, and mixtures thereof. The preferred cathode active mixture thus includes a powdered fluoro-polymer binder present at a quantity of at least about 3 weight percent, a conductive diluent present at a quantity of at least about 3 weight percent and from about 80 to about 98 weight percent of the cathode active material.

A suitable cathode current collector is selected from the group consisting of stainless steel, titanium, tantalum, platinum, gold, aluminum, cobalt nickel alloys, highly alloyed ferritic stainless steel containing molybdenum and chromium, and nickel-, chromium-, and molybdenum-containing alloys. For a silver vanadium oxide or copper silver vanadium oxide cathode, the current collector is preferably of aluminum or titanium with the latter being preferred.

A preferred method of cathode preparation is to place a blank cut from a free-standing sheet of cathode active material in non-adherent contact with a current collector. Blank preparation starts by taking any one of the previously described cathode active materials in a granular form, preferably silver vanadium oxide, and adjusting its particle size to a useful range in an attrition or grinding step. In one preferred embodiment, the SVO is "high temperature" silver vanadium oxide (ht-SVO) prepared according to the methods described in U.S. Patent No. 6,566,007 to Takeuchi et al. This patent is assigned to the assignee of the present invention and incorporated herein by reference. The preparation protocols of the '007 patent to Takeuchi et al. result in SVO having a surface area of from about 0.2 m²/gram to about 0.8 m²/gram. This material can be used as is or subsequently subjected to an attriting step to arrive at a desired surface area for cathode sheet preparation. If an attrited active material is desired, a ball mill or vertical ball mill is preferred and typical grinding times range from between about 10 to 15 minutes. Preferably, attriting results in an active material having a surface area up to about 2.6 m²/gram.

In any event, the finely divided active material is preferably mixed with carbon black and/or graphite as conductive diluents and a powder fluoro-resin such as polytetrafuoroethylene powder as a binder material to form a depolarizer admixture. This is typically done in a solvent of either water or an inert organic medium such as mineral spirits. The mixing process provides for fibrillation of the fluoro-resin to ensure material integrity. After mixing sufficiently to ensure homogeneity in the admixture, the active admixture is removed from the mixer as a paste.

Following the mixing step, the solvent is vacuum filtered from the paste to adjust the solvent content to about 0.25 cc to about 0.35 cc per gram of solids, i.e., the solids comprising the electrode active material (SVO), the conductive diluent and the binder. The resulting filter cake is fed into a series of roll mills that compact the active admixture into a thin sheet having a tape form, or the active filter cake is first run through a briquette mill. In the latter case, the active admixture is formed into small pellets which are then fed into the roll mills.

Typically, the compacting step is performed by roll mills comprising two to four calender mills that serve to press the admixture between rotating rollers to provide a free-standing sheet of the active material as a continuous tape. In a preferred method, cathodes are made from blanks prepared as described in U.S. Patent No. 6,582,545 to Thiebolt III et al. This patent is assigned to the assignee of the present invention and incorporated herein by reference. It teaches that the basis weight of an electrode active admixture such as one including silver vanadium oxide is formed into an electrode structure from an admixture paste subjected to a calendering process using a secondary calendering step performed in a direction reverse or orthogonal to that used to form the initial sheet tape. Orthogonal or reverse feed of the electrode active admixture provides for fibrillation of the fluoro-polymeric binder in other than the initial direction. This lets the binder spread in directions transverse to the initial direction. In a broader sense, however, the secondary step is in any direction other than the first direction to provide the electrode active sheet tape having a second thickness less than the first thickness. It is believed that when the electrode active admixture is calendered in a single direction the binder is fibrillated to an extent near its maximum tensile strength. If the electrode active sheet tape is calendered in a secondary direction, the active admixture spreads in directions other than, and preferably transverse to, the initial direction. Accordingly, the secondary calendering step forms a thinner sheet tape with a broader footprint having a lower basis weight, defined as grams/in² of the cathode active admixture, than the sheet material formed from the primary calendering. Preferably, the electrode active sheet tape comprises the active material having a basis weight of less than about 340 mg/in².

The tape preferably has a thickness in the range of from about 0.0015 inches to about 0.020 inches. The outer edges of the tape leaving the rollers are trimmed and the resulting tape is subsequently subjected to a drying step under vacuum conditions. The drying step serves to remove any residual solvent and/or water from the active material. Alternatively, the process can include the drop wise addition of a liquid electrolyte into the active mixture prior to the initial calendering step to enhance the performance and rate capacity of an assembled electrochemical cell. The active sheet tape can be stored for later use, or fed on a conveyor belt to a punching machine. The punching operation forms the sheet tape into active blanks of any dimension needed for preparation of an electrode component for use in a high energy density electrochemical cell.

U.S. Patent Nos. 5,435,874 and 5,571,640, both to Takeuchi et al., provide greater details regarding preparation of a cathode component by the just described sheeting process. These Takeuchi et al. patents are also assigned to the assignee of the present invention and incorporated herein by reference.

In one embodiment, the cathode has one of the above active materials, for example SVO, as a blank cut from a free-standing sheet and in non-adherent contact with both sides of a cathode current collector. In another embodiment, the cathode has a sandwich design as described in U.S. Pat. No. 6,551,747 to Gan. The sandwich cathode design comprises a first active material of a relatively low energy density but a relatively high rate capability in comparison to a second cathode active material. Silver vanadium oxide is a preferred first cathode active material. Another is the previously described copper silver vanadium oxide. One preferred second active material is fluorinated carbon. Preferably, both, but at least the high rate active material is in the form of a blank cut from a free-standing sheet in non-adherent contact with the current collector.

In a broader sense, it is contemplated by the scope of the present invention that the first active material of the sandwich cathode design is any material which has a relatively lower energy density but a relatively higher rate capability than the first active material. In that respect, other than silver vanadium oxide and copper silver vanadium oxide, V₂O₅, MnO₂, LiCoO₂, LiNiO₂, LiMn₂O₄, TiS₂, CuS, FeS, FeS₂, CuO, copper vanadium oxide, and mixtures thereof are useful as the first active material. And, in addition to fluorinated carbon, Ag₂0, Ag₂O₂, CuF, Ag₂CrO₄, MnO₂, and even SVO itself, are useful as the second active material. The theoretical volumetric capacity (Ah/ml) of CF, is 2.42, Ag₂O₂ is 3.24, Ag₂O is 1.65 and AgV₂O_{5.5} is 1.37. Thus, CFₓ, Ag₂O₂, Ag₂O, all have higher theoretical volumetric capacities than that of SVO.

In order to prevent internal short circuit conditions, the cathode is physically segregated from the lithium anode by a separator. The separator is of electrically insulative material that is chemically unreactive with the anode and cathode active materials and both chemically unreactive with and insoluble in the electrolyte. In addition, the separator material has a degree of porosity sufficient to allow flow there through of the electrolyte during the electrochemical reactions of the cell. Illustrative separator materials include fabrics woven from fluoropolymeric fibers including polyvinylidine fluoride, polyethylenetetrafluoroethylene, and polyethylenechlorotrifluoroethylene used either alone or laminated with a fluoropolymeric microporous film, non-woven glass, polypropylene, polyethylene, glass fiber materials, ceramics, a polytetrafluoroethylene membrane commercially available under the designation ZITEX^{®} (Chemplast Inc.), a polypropylene membrane commercially available under the designation CELGARD^{®} (Celanese Plastic Company, Inc.), a membrane commercially available under the designation DEXIGLAS^{®} (C.H. Dexter, Div., Dexter Corp.), and a membrane commercially available under the designation TONEN^{®}.

The electrochemical cell of the present invention further includes a nonaqueous, ionically conductive electrolyte serving as a medium for migration of ions between the anode and the cathode electrodes during electrochemical reactions of the cell. The electrochemical reaction at the electrodes involves conversion of ions in atomic or molecular forms that migrate from the anode to the cathode. Thus, suitable nonaqueous electrolytes are substantially inert to the anode and cathode materials, and they exhibit those physical properties necessary for ionic transport, namely, low viscosity, low surface tension and wettability.

A suitable electrolyte has an inorganic, ionically conductive lithium salt dissolved in a mixture of aprotic organic solvents comprising a low viscosity solvent and a high permittivity solvent. Preferred lithium salts include LiPF₆, LiBF₄, LiAsF₆, LiSbF₆, LiClO₄, LiO₂, LiAlCl₄, LiGaCl₄, LiC(SO₂CF₃)₃, LiN(SO₂CF₃)₂, LiSCN, LiO₃SCF₃, LiC₆FSO₃, LiO₂CCF₃, LiSO₆F, LiB(C₆H₅)₄, LiCF₃SO₃, and mixtures thereof.

Low viscosity solvents useful with the present invention include esters, linear and cyclic ethers and dialkyl carbonates such as tetrahydrofuran (THF), methyl acetate (MA), diglyme, trigylme, tetragylme, dimethyl carbonate (DMC), 1,2-dimethoxyethane (DME), 1,2-diethoxyethane (DEE), 1-ethoxy,2-methoxyethane (EME), ethyl methyl carbonate, methyl propyl carbonate, ethyl propyl carbonate, diethyl carbonate, dipropyl carbonate, and mixtures thereof. High permittivity solvents include cyclic carbonates, cyclic esters and cyclic amides such as propylene carbonate (PC), ethylene carbonate (EC), butylene carbonate, acetonitrile, dimethyl sulfoxide, dimethyl formamide, dimethyl acetamide, γ-valerolactone, γ-butyrolactone (GBL), N-methyl-2-pyrrolidone (NMP), and mixtures thereof. In the present invention, the preferred electrolyte for a Li/SVO || cell is 0.8M to 1.5M LiAsF₆ or LiPF₆ dissolved in a 50:50 mixture, by volume, of propylene carbonate and 1,2-dimethoxyethane.

The preferred form of the electrochemical cell is a case-negative design wherein the anode/cathode couple is inserted into a conductive metal casing connected to the anode current collector, as is well known to those skilled in the art. A preferred material for the casing is stainless steel, although titanium, mild steel, nickel, nickel-plated mild steel and aluminum are also suitable. The casing header comprises a metallic lid having a sufficient number of openings to accommodate the glass-to-metal seal/terminal pin feedthrough for the cathode. The anode is preferably connected to the case or the lid. An additional opening is provided for electrolyte filling. The casing header comprises elements having compatibility with the other components of the electrochemical cell and is resistant to corrosion. The cell is thereafter filled with the electrolyte solution described hereinabove and hermetically sealed, such as by close-welding a stainless steel plug over the fill hole, but not limited thereto. The cell of the present invention can also be constructed in a case-positive design.

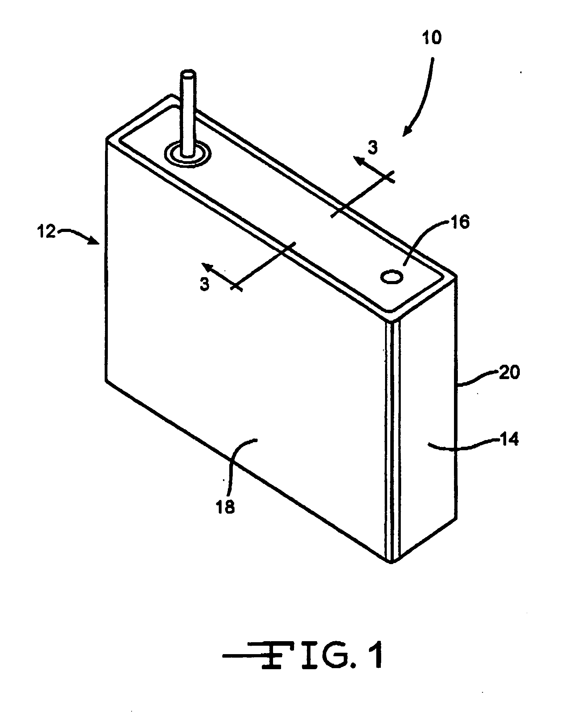

Referring now to the drawings, FIG. 1 is a perspective view of an electrochemical cell 10 of the present invention that is comprised of a conductive casing 12 including an open container 14 to which lid 16 is secured. Container 14 is formed with opposed substantially parallel side walls 18 and 20, and may have a prismatic shape as depicted in FIG. 1, or other shapes known in the art including cylindrical and button-shape. With respect to the internal structure, the cell is further comprised of an anode comprising anode active material, a cathode, and an electrolyte solution activating the cathode and the anode.

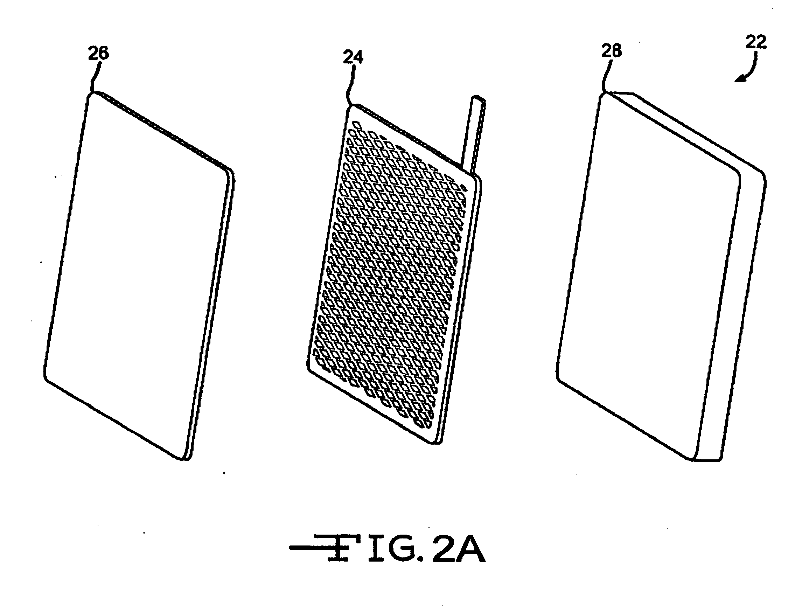

In general, electrochemical cell 10 is comprised of a cathode having separate sheets of at least two disparate active materials in contact with opposite sides of a current collector. One of the sheets of cathode active material may either be in adherent or non-adherent contact with one side of the current collector as long as the other sheet of the second cathode active material is in non-adherent contact with the other side of the current collector. The cathode may include multiple sheets of cathode active materials and multiple current collectors as will be explained presently with reference to FIGs. 2A to 2C.

FIG. 2A is an exploded perspective view of one embodiment of a first cathode that can be used in the cell of FIG. 1. Cathode 22 is comprised of a first current collector 24, a first sheet 26 of a first cathode active material in non-adherent contact with the first current collector 24, and in non-adherent and congruent contact with a first sheet 28 of a second cathode active material. The first cathode active material of sheet 26 is a high rate low energy density cathode material and the second cathode active material of sheet 28 is a low rate high energy density cathode material. The high rate low energy density cathode material may be silver vanadium oxide (SVO) and the low rate high energy density cathode material may be fluorinated carbon (CFₓ). Thus, when cathode 22 is assembled in an electrochemical cell, its configuration is SVO || current collector || CFₓ. Throughout this specification, the double bar ( || ) symbol is indicative of non-adherent congruent contact between adjacent materials.

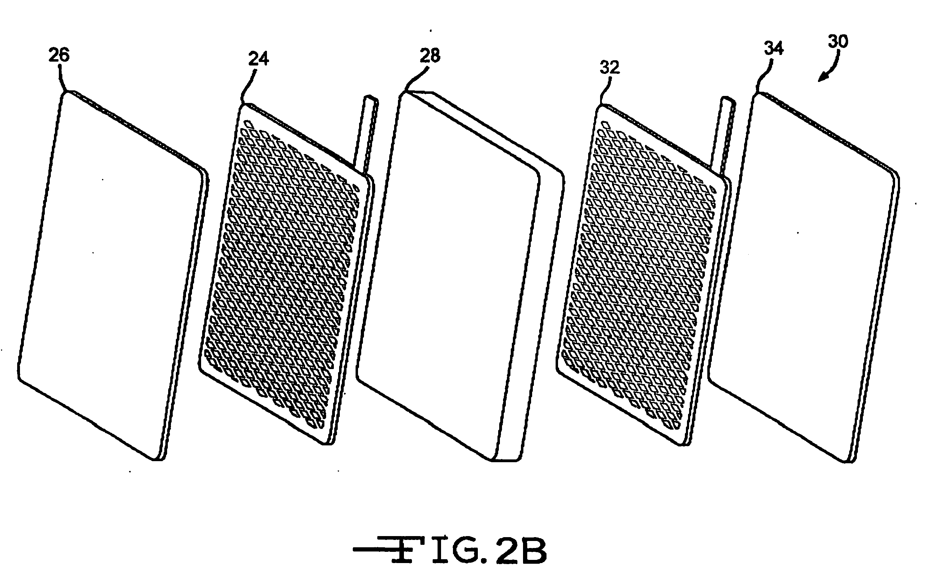

FIG. 2B is an exploded perspective view of a second cathode that can be used in the cell of FIG. 1. Cathode 30 is similar to cathode 22 of FIG. 2A, and further comprises a second current collector 32. A second sheet 34 of the first cathode active material is in non-adherent contact with the second current collector and in non-adherent and congruent contact with the first sheet 28 of the second cathode active material. In an embodiment in which the first cathode active material is SVO and the second cathode active material is CFₓ, the assembled cathode configuration is SVO || current collector (CC) || CFₓ || current collector || SVO.

In forming the cathodes 22 and 30 and electrochemical cells including such cathodes, the cathode active materials are pressed independently and then assembled against the current collector 24 (FIG. 2A), or against current collectors 24 and 32 (FIG. 2B). The assembly is done without application of final assembly pressure as is typical in the manufacture of prior art cathodes and electrochemical cells.

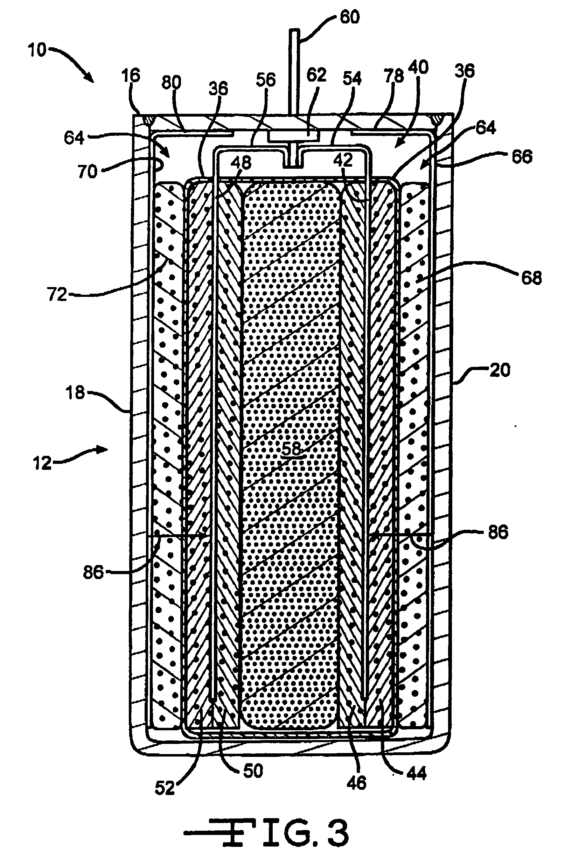

The electrochemical cell 10 may further comprise a separator 36 (FIG. 3) enveloping the cathode and maintaining congruent contact of the sheets of cathode active materials with each other. Alternatively or additionally, the spaced-apart substantially parallel side walls 18 and 20 of the casing 12 may be dimensioned to provide a tight fit of the anode and cathode therein, thereby applying a force to the current collector(s) and sheets of cathode active material. For example, the casing parallel side walls 18 and 20 may apply a force to the first current collector 24, the first sheet 26 of the first cathode active material, and the first sheet 28 of the second cathode active material, thereby maintaining the congruent contact of the active sheets 26, 28 with each other. In the present invention, cell discharge performance is not compromised as long as electrical contact and mechanical alignment is maintained between the cathode components. By pressing the cathode active materials separately, the formulation and density can be optimized without cupping or distorting the final electrode.

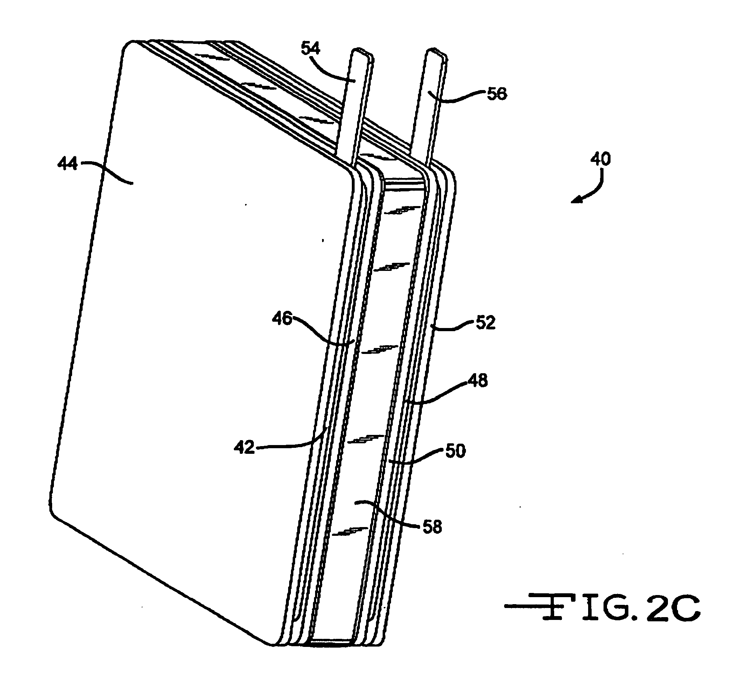

FIG. 2C is a perspective view of a preferred third cathode 40 that can be used in the cell of FIG. 1. Cathode 40 is comprised of a first current collector 42 in contact with first and second sheets 44 and 46 of a first cathode active material, and a second current collector 48 in contact with third and fourth sheets 50 and 52 of the first cathode active material. Prior to final cell assembly, extended tabs 54 and 56 of the current collectors 42 and 48 are positioned to prevent contact with the casing lid 16 and are joined to feedthrough wire 60, such as by welding. Feedthrough wire 60 is insulated from casing lid 16 by a glass-to-metal seal 62. Cathode 40 is further comprised of a first sheet 58 of the second cathode active material in non-adherent and congruent contact with the second and third sheets 46, 50 of the first cathode active material.

The first and second sheets 44, 46 of the first cathode active material may be in adherent contact with the first current collector 42, and the third and fourth sheets 50, 52 of first cathode active material may be in adherent contact with the second current collector 48. Such a cathode 40 has the configuration SVO | current collector | SVO || CFₓ || SVO | current collector | SVO, where the double bar || symbol is indicative of non-adherent congruent contact between adjacent materials, and the single bar I symbol is indicative of adherent contact between adjacent materials.

For the sake of clarity of illustration, current collectors 42 and 48 are shown in FIG. 2C with thicknesses that are comparable to the thicknesses of the sheets of first cathode active material. It is to be understood that this aspect of FIG. 2C is not drawn to scale. The thickness of the sheets of the first cathode active material is typically on the order of millimeters, while the thickness of the current collectors is on the order of tenths of a millimeter.

Electrochemical cell 10 is further comprised of an anode 64 including a first anode current collector 66 supporting a first sheet 68 of anode active material and a second anode current collector 72 supporting a second sheet 72 of anode active material. The outer sides of the anode current collectors 66, 70 are against the casing sidewall 18, 20. An extended tab 78 of the current collector 66 is in electrical contact with the casing lid 16 and may be joined thereto by welding. In like manner, an extended tab 80 of the current collector 70 is in electrical contact with the lid 16. After the lid 16 is joined to the casing container 14, the void volume in the casing 12 is filled with an electrolyte (not shown) activating the cathode and the anode.

The electrochemical cell may further comprise a separator 36, preferably of a double layer construction, enveloping the cathode 40 and maintaining congruent contact of the first sheet 58 of the second cathode active material intermediate the second and third sheets 46, 50 of the first cathode active material. Alternatively or additionally, the casing 12 may be comprised of spaced-apart substantially parallel side walls dimensioned to apply a force to the sheets of cathode active material contained therein. For cell 10, the casing parallel side walls 18 and 20 may apply a compressive force indicated by arrows 86 to the second sheet 46 of the first cathode active material, the first sheet 58 of the second cathode active material, and the third sheet 50 of first cathode active material, thereby maintaining congruent contact of sheets 46 and 50 with intermediate sheet 58. It will be apparent that the compressive force is transmitted through the anode active materials and their respective current collectors and separators, which are substantially incompressible solids.

In manufacturing the cell 10 of FIG. 3, the first, second, third, and fourth sheets 44, 46, 50, 52 of the first cathode active material may be formed separately and then contacted to the current collectors 42, 48. Alternatively, first and second sheets 44, 46 of the first cathode active material may be pressed onto current collector 42, and the third and fourth sheets 50, 52 of the first cathode active material may be pressed onto current collector 48 by methods such as those disclosed in the aforementioned U.S. Pat. Nos. 5,435,874 to Takeuchi et al., 6,174,622 to Thiebolt III et al. and 6,551,747 to Gan. The first sheet 58 of the second cathode active material is then placed in non-adherent and congruent contact with the second and third sheets 46, 50 of the first cathode active material, thereby forming the cathode 40. Separator 36 may be formed to envelope cathode 40 and maintain congruent contact of the second and third sheets 46, 50 of the first cathode active material with the intermediate first sheet 58 of second cathode active material.

The cathode 40 is then assembled with the anode 64 to form an anode/cathode electrode assembly. Next, the anode current collector tabs 78, 80 are joined to the lid 16, and the cathode current collector tabs 54, 56 are joined to the feedthrough wire 60. The anode/cathode electrode assembly is then inserted into the container 14 of casing 12, and lid 16 is joined and sealed to the container. Then, an electrolyte (not shown) is filled into the casing 12 to activate the anode 64 and the cathode 40.

In manufacturing a cell comprised of the cathode 22 of FIG. 2A, the cathode is made by forming a first sheet 26 of a first cathode active material and a first sheet 28 of a second cathode active material, placing the first cathode active material sheet 26 in non-adherent contact with a first current collector 24, and placing the second cathode active material sheet 28 in non-adherent contact with the first current collector 24 and non-adherent and congruent contact with the first cathode active material sheet 26. The remaining steps of manufacturing such a cell are similar to those described for cell 10 of FIG. 3.

### EXAMPLE I

A group of cathodes and cathode sheets were pressed in the configurations listed in Table 1. For cathodes with non-adhered active material sheets, standard assembly pressures that are used in conventional cathode fabrication were used. Cathode screens were not included in the pressing of non-adhered sheets. Current collectors were of carbon coated titanium screen. The same SVO pressing conditions were used for the SVO sheets of cathodes 1, 2, 1A and 2A. The same CFₓ pressing conditions were used for the CFₓ sheets of cathodes 1, 2, 1A, 2A, 1B and 2B. Cathode CFₓ sheets 3 and 4 were pressed at higher pressure than the sheets of 1, 2, 1A, 2A, 1B and 2B.

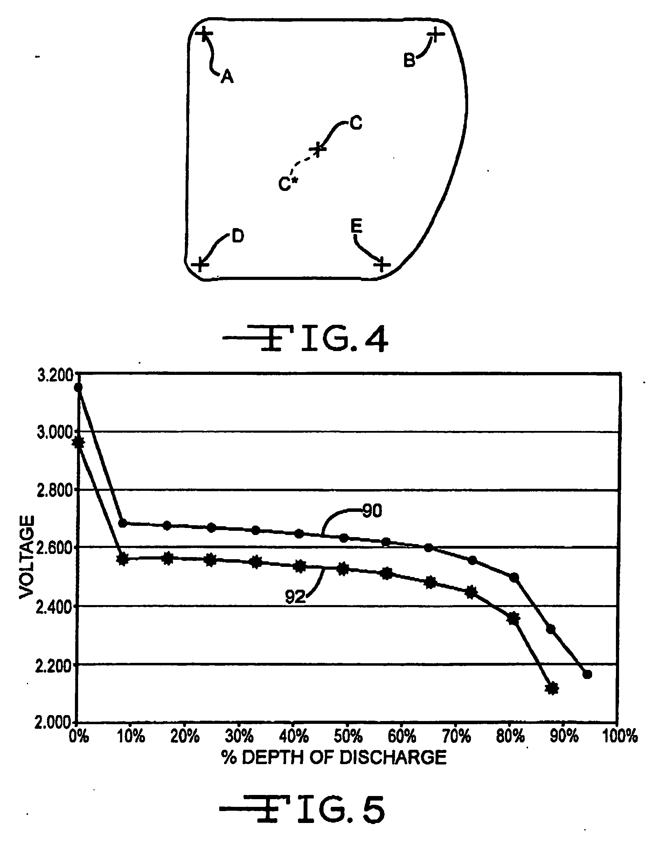

Immediately following pressing, a drop gauge Model ABSOLUTE ID-F12SE manufactured by Mitotoyu was used to measure electrode thickness at the five points A - E indicated in FIG. 4. If cupping of the electrode or electrode sheet was visually observed, the five measurements were made with the cathode and sheet cup facing upward. The cathode and sheet were then inverted and a sixth thickness measurement was taken again at location C. Data for these measurements are shown in column "C*" of Table 1. The center point C and C* measurements can be used to estimate the extent of electrode cupping, which is defined as the difference between the two center point values, i.e. cupping = C - C*.

In Table 1, cupping is shown in the right column. Severe cupping was observed in three of the four adhered "control" samples made by conventional methods (cathodes 5, 6 and 7). The CFₓ cathode sheets pressed at high pressure did not appear to cup more than those pressed under standard assembly pressures. However, the thickness data suggests that the sheets pressed at higher pressure have a slightly higher electrode density.

**Table 1**

| CATHODE | CONFIGURATION | THICKNESS (IN.) | | | | | | CUPPING (IN.) |
|---|---|---|---|---|---|---|---|---|
| | | A | B | C | D | E | C* | |
| 1 | SVO\|CC\|SVO\|\|CFₓ\|\|SVO\|CC\|SVO | 0.088 | 0.084 | 0.084 | 0.085 | 0.080 | 0.085 | 0.0015 |
| 2 | SVO\|CC\|SVO\|\|CFₓ\|\|SVO\|CC\|SVO | 0.084 | 0.085 | 0.084 | 0.082 | 0.082 | 0.084 | -0.0001 |
| 1A | SVO\|\|CC\|\|CFₓ | 0.077 | 0.080 | 0.078 | 0.074 | 0.078 | 0.078 | -0.0002 |
| 2A | SVO\|\|CC\|\|CFₓ | 0.077 | 0.078 | 0.076 | 0.075 | 0.074 | 0.077 | 0.0008 |
| 1B | CFₓ | 0.076 | 0.072 | 0.075 | 0.073 | 0.074 | 0.075 | 0.0006 |
| 2B | CFₓ | 0.077 | 0.077 | 0.074 | 0.069 | 0.072 | 0.075 | 0.0008 |
| 3 | CFₓ | 0.070 | 0.072 | 0.070 | 0.066 | 0.071 | 0.070 | 0.0006 |
| 4 | CFₓ | 0.069 | 0.068 | 0.068 | 0.066 | 0.066 | 0.068 | 0.0001 |
| 5 | SVO\|CC\|SVO\|CFₓ\|SVO\|CC\|SVO | 0.082 | 0.085 | 0.084 | 0.078 | 0.082 | 0.119 | 0.0346 |
| 6 | SVO\|CC\|SVO\|CFₓ\|SVO\|CC\|SVO | 0.084 | 0.079 | 0.083 | 0.084 | 0.081 | 0.121 | 0.0382 |
| 7 | SVO\|CC\|CFₓ | 0.077 | 0.080 | 0.076 | 0.072 | 0.074 | 0.112 | 0.0354 |
| 8 | SVO\|CC\|CFₓ | 0.080 | 0.079 | 0.078 | 0.073 | 0.072 | 0.079 | 0.0003 |

| | | | | | | | | |
|---|---|---|---|---|---|---|---|---|
| "CC" is current collector screen. \| Symbol denotes cathode materials adhered to each other or to adjacent current collector screen. \|\| Symbol denotes cathode materials not adhered to each other or to adjacent current collector screen. * Cathode or cathode sheet inverted for cupping measurement. | | | | | | | | |

### EXAMPLE II

A group of ten cells were made with a cathode comprised of a first sheet of SVO active material, an intermediate carbon coated titanium screen current collector, and a first sheet of CFₓ active material.

Five of the ten cells were made according to conventional methods in which the two active materials are pressed and adhered to the current collector. For each of these cells, approximately 1300 milligrams of a CFₓ material mixture (91% CFₓ, 4% graphite and 5% PTFE, by weight) was first compressed at low pressure to form a CFₓ sheet. Approximately 210 milligrams of SVO material mixture (94% SVO, 3% graphite and 3% PTFE, by weight) already made in sheet form was punched in the same shape as the CFₓ cathode sheet. The SVO sheets and the CFₓ sheets were then pressed on opposite sides of the titanium current collector screens at high pressure to produce the adhered cathodes having the configuration SVO | CC | CFₓ.

The resulting cathodes were then heat sealed into bags formed from two layers of micro-porous polyethylene separator material, and assembled with lithium anodes and sealed within stainless steel casings to form the electrochemical cells. The SVO portion of the cathodes was directly adjacent to the lithium anodes, which had been pressed onto nickel current collectors. The five cells were activated with 1M LiAsF₆ in a 50:50 volume mixture of propylene carbonate/dimethoxyethane (PC/DME) electrolyte.

The other five cells were made according to the present invention in which the cathodes are as depicted in FIG. 2A. SVO and CFₓ cathode sheets were compressed separately from the current collector screens. The cathode sheets were of the same respective masses and were compressed at the same pressures as in the first five cells. For each cathode, the SVO sheet, current collector, and CFₓ sheet were precisely aligned and sealed into a separator bag to produce the non-adhered cathodes having the configuration SVO || CC || CFₓ. The sheets of cathode material in these cells were observed to be slideable against one another, but precise congruent alignment was maintained when the cathodes were assembled with anodes and an intermediate separator, placed and sealed in casings, and activated with electrolyte.

Each of the sets of five cells were equilibrated at room temperature for five days and underwent acceptance pulsing. The cells were then connected to constant resistive discharge loads sized to deplete them of their entire capacity in 21 days. Sixty-second 5.5 mA/cm² constant current pulses were applied every 42 hours until cell voltage fell below 2 volts.

FIG. 5 shows the result of this discharge testing as cell voltage vs. depth of discharge, expressed as a percentage of total cell capacity. The upper data plot 90 consists of pre-pulse voltages, and the lower data plot 92 consists of minimum and pulse end voltages. Along each plot, the data clusters include discharge data from both the first five "control" cells and the second five cells of the present invention. It can be seen that the performance of the cells of the present invention is indistinguishable from that of the control cells.

The present cells are considered to be advantageous. This is because their electrode sheets likely do not have the cupping that was present in most of the control cathodes previously described and shown in Table 1. Additionally, it is believed that because the cathode sheets are not adhered to each other or to the current collector, they are less prone to further cupping or otherwise distortion, delamination and separation from each other or from the current collector as further relaxation occurs during cell operation. The cells of the present invention are thus more reliable and less discharge performance variation occurs from cell to cell.

### EXAMPLE III

Two groups of five cells were made as described in Example I. Each of the cells were equilibrated at room temperature for five days followed by acceptance pulsing. The cells were then connected to constant resistive discharge loads sized to deplete them of their entire capacity in 90 days. The loads were removed when cell voltage fell below 2 volts.

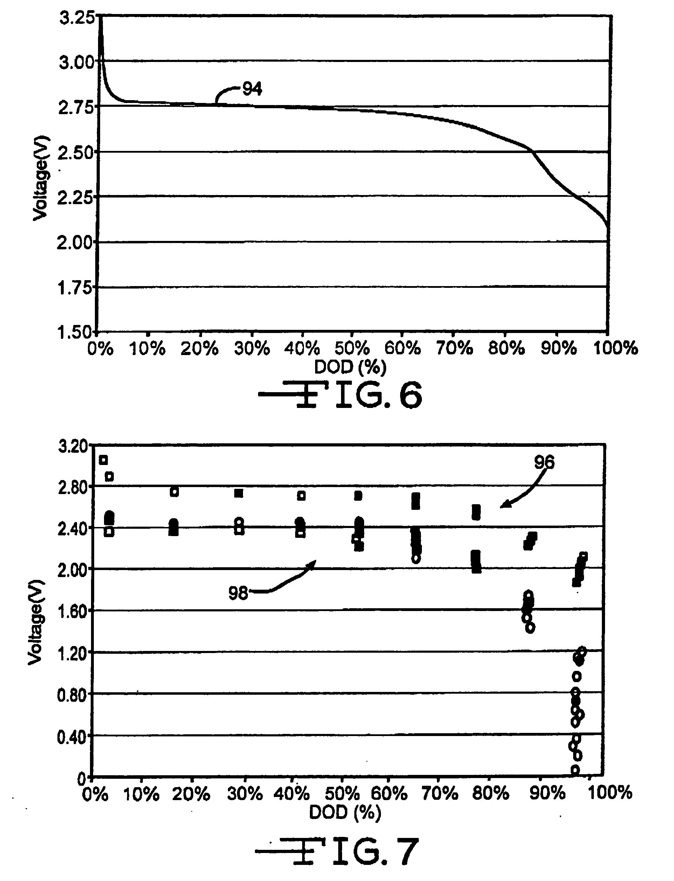

Cell voltages were monitored and recorded continuously. FIG. 6 shows the result of this discharge testing. The data plot 94 includes discharge data from both the first five "control" cells and the second five cells of the present invention. It can be seen that the performance of the present cells is again indistinguishable from that of the control cells.

### EXAMPLE IV

A group of eight cells was made with a cathode comprised of a first sheet of SVO active material, an intermediate carbon coated titanium screen current collector, and a second sheet of SVO active material; a third sheet of SVO active material, an intermediate carbon coated titanium screen current collector, and a fourth sheet of SVO active material; and a first sheet of CFₓ active material disposed between the second sheet of SVO active material and the third sheet of SVO active material.

Four of the eight cells were made according to the conventional method in which the full set of active materials was pressed and adhered to the current collectors in one pressing step. For each of these cells, approximately 1300 milligrams of a CFₓ mixture similar to that described in Example II was compressed at low pressure to form a CFₓ sheet. Four sheets of approximately 210 milligrams each of a SVO mixture similar to that described in Example II already made in sheet form was punched in the same shape as the CFₓ cathode sheet. The SVO sheets and the CFₓ sheets were then pressed with the titanium current collector screens at high pressure to produce the adhered cathodes having the configuration SVO | CC | SVO | CFₓ | SVO | CC | SVO.

The resulting cathodes were then heat sealed into bags formed from two layers of micro-porous polyethylene separator material, assembled with lithium anodes and sealed within stainless steel casings to form the electrochemical cells. The outer SVO portions of the cathodes were directly adjacent to the lithium anodes, which had been pressed onto nickel current collectors. The four cells were activated with 1M LiAsF₆ in a 50:50 volume mixture of PC/DME electrolyte.

The other four cells were made according to the present invention as shown in FIG. 2C. In that respect, two sheets of SVO were pressed on opposite sides of their respective current collector screens. CFₓ cathode sheets were compressed separately. The sheets of SVO and CFₓ were of the same respective masses and were compressed at the same pressures as in the first four cells. For each cathode, the two pairs of SVO sheets and current collectors, and the CFₓ sheet were precisely aligned and sealed into a separator bag to produce the non-adhered cathodes having the configuration SVO | CC | SVO || CFₓ || SVO I CC | SVO. Precise congruent alignment between the SVO and the CFₓ sheets was maintained when the cathodes were assembled with anodes, placed and sealed in casings, and activated with electrolyte.

Each of the two sets of four cells were equilibrated at room temperature followed by acceptance pulsing. The cells were then connected to constant resistive discharge loads sized to deplete them of their entire capacity in 60 days. Ten-second 19 mA/cm² constant current pulses were applied every seven days until twelve pulse trains had been applied.

FIG. 7 shows the result of this discharge testing as cell voltage vs. depth of discharge expressed as a percentage of total cell capacity. The upper data plot 96 consists of pre-pulse voltages, and the lower data plot 98 consists of minimum and pulse end voltages. Along each plot, the data clusters include discharge data from both the first four "control" cells and the second four cells of the present invention. It can be seen that the performance of the two groups is similar. The cells of the present invention are slightly superior to the control cells.

It is therefore apparent that there has been provided in accordance with the present invention electrochemical cells comprised of cathodes having separate sheets of at least two active materials that are in contact with but not adhered to each other and/or to a current collector, and methods for manufacturing the electrochemical cells.

## Claims

1. An electrochemical cell comprising:
a) a casing;
b) an anode comprising anode active material;
c) a cathode comprising a first current collector, a first sheet of a first cathode active material in either adherent or non-adherent contact with the first current collector, and in non-adherent contact with a first sheet of a second cathode active material, wherein the non-adherent contact is characterized as direct physical contact that is devoid of molecular forces selected from the group consisting of chemical bonds, hydrogen bonds, and Van der Waals forces between the current collector and the cathode active material sheets, as the case may be;
d) a separator intermediate the anode and the cathode to prevent direct physical contact between them; and
e) an electrolyte activating the cathode and the anode.

2. The electrochemical cell of claim 1 wherein the first sheet of the first cathode active material is congruent with the first sheet of the second cathode active material.

3. The electrochemical cell of claim 1 or claim 2 wherein the first sheet of the first cathode active material is in non-adherent contact with the first sheet of the second cathode active material through perforations in the first current collector.

4. The electrochemical cell of claim 1 or claim 2 wherein the first sheet of the first cathode active material is in non-adherent contact with the first sheet of the second cathode active material in a side-by-side relationship.

5. The electrochemical cell of any of claims 1 to 4 further comprising a separator enveloping the cathode and maintaining the non-adherent contact of the first sheet of the first cathode active material with the first sheet of the second cathode active material.

6. The electrochemical cell of any of claims 1 to 5 wherein the casing is comprised of spaced-apart substantially parallel side walls that apply a force to the first current collector intermediate the first sheet of the first cathode active material and the first sheet of the second cathode active material thereby maintaining the non-adherent contact of the first sheet of first cathode active material with the first sheet of the second cathode active material.

7. The electrochemical cell of any of claims 1 to 6 further comprising a second current collector and wherein a second sheet of the first cathode active material is either in adherent or non-adherent contact with the second current collector and in non-adherent and congruent contact with the first sheet of the second cathode active material.

8. An electrochemical cell comprising:
a) a casing;
b) an anode comprising anode active material:
c) a cathode comprising a first current collector, first and second sheets of a first cathode active material in contact with the first current collector, a second current collector, third and fourth sheets of the first cathode active material in contact with the second current collector, and a first sheet of second cathode active material in non-adherent contact with the second and third sheets of the first cathode active material, wherein the non-adherent contact is characterized as direct physical contact that is devoid of molecular forces selected from the group consisting of chemical bonds, hydrogen bonds, and Van der Waals forces between the current collector and the cathode active material sheets, as the case may be;
d) a separator intermediate the anode and the cathode to prevent direct physical contact between them; and
e) an electrolyte activating the cathode and the anode.

9. The electrochemical cell of claim 8 wherein the first and second sheets of the first cathode active material are in adherent contact with the first current collector, and the third and fourth sheets of the first cathode active material are in adherent contact with the second current collector.

10. The electrochemical cell of claim 8 or claim 9 further comprising a separator enveloping the cathode and maintaining the non-adherent contact of the first sheet of the second cathode active material with the second and third sheets of the first cathode active material.

11. The electrochemical cell of any of claims 8 to 10 wherein the casing is comprised of spaced-apart substantially parallel side walls that apply a force to the second sheet of the first cathode active material, the third sheet of the first cathode active material, and the first sheet of the second cathode active material, thereby maintaining the non-adherent contact of the first sheet of the second cathode active material with the second and third sheets of the first cathode active material.

12. The electrochemical cell of any of claims 1 to 11 wherein the first cathode active material is a relatively high rate low energy density cathode material and the second cathode active material is a relatively low rate high energy density cathode material.

13. The electrochemical cell of any of claims 1 to 12 wherein the first cathode active material is a relatively high rate, low energy density cathode material selected from the group consisting of silver vanadium oxide (SVO), copper silver vanadium oxide, V₂O₅, MnO₂, LiCoO₂, LiNiO₂, LiMn₂O₄, TiS₂, CuS, FeS, FeS₂, CuO, copper vanadium oxide, and mixtures thereof, and the second cathode active material is a relatively low rate high energy density cathode material selected from the group consisting of fluorinated carbon, Ag₂O, Ag₂O₂, CuF, Ag₂CrO₄, MnO₂, SVO itself, and mixtures thereof.

14. The electrochemical cell of any of claims 1 to 13 wherein the first cathode active material is SVO and the second cathode active material is CFₓ.

15. A method for manufacturing an electrochemical cell comprising:
a) forming a first sheet of a first cathode active material and a first sheet of a second cathode active material;
b) placing the first sheet of the first cathode active material in either adherent or non-adherent contact with a first current collector;
c) placing the first sheet of the second cathode active material in non-adherent contact with the first current collector and non-adherent contact with the first sheet of the first cathode active material, thereby forming a cathode, wherein the non-adherent contact is characterized as direct physical contact that is devoid of molecular forces selected from the group consisting of chemical bonds, hydrogen bonds, and Van der Waals forces between the current collector and the cathode active material sheets, as the case may be;
d) assembling the cathode with an anode and an intermediate separator to form an anode/cathode assembly;
e) housing the anode/cathode assembly in a casing to maintain the non-adherent contact of the first sheet of the first cathode active material with the first sheet of the second cathode active material; and
f) activating the anode/cathode assembly with an electrolyte.

16. The method of claim 15 further comprising enveloping the cathode in a separator dimensioned to maintain the first sheet of the first cathode active material in non-adherent contact with the first sheet of the second cathode active material.

17. The method of claim 15 or claim 16 further comprising placing a second sheet of the first cathode active material in either adherent or non-adherent contact with a second current collector and in non-adherent contact with the first sheet of the second cathode active material.

18. A method for manufacturing an electrochemical cell comprising:
a) forming first, second, third and fourth sheets of a first cathode active material and a first sheet of a second cathode active material;
b) placing the first and second sheets of the first cathode active material in adherent contact with a first current collector, and the third and fourth sheets of the first cathode active material in adherent contact with a second current collector;
c) placing the first sheet of the second cathode active material intermediate and in non-adherent contact with the second and third sheets of the first cathode active material, thereby forming a cathode, wherein the non-adherent contact is characterized as direct physical contact that is devoid of molecular forces selected from the group consisting of chemical bonds, hydrogen bonds, and Van der Waals forces between the current collector and the cathode active material sheets, as the case may be;
d) assembling the cathode with an anode and an intermediate separator to form an anode/cathode assembly;
e) housing the anode/cathode assembly in a casing to maintain contact of the second and third sheets of the first cathode active material with the first sheet of the second cathode active material; and
f) activating the anode/cathode assembly with an electrolyte.

19. The method of claim 18 further comprising enclosing the cathode in a separator bag dimensioned to maintain contact of the second and third sheets of first cathode active material with the first sheet of second cathode active material.

20. The method of any of claims 15 to 19 wherein the first cathode active material is a relatively high rate low energy density cathode material and the second cathode active material is a relatively low rate high energy density cathode material.

21. The method of any of claims 15 to 20 wherein the first cathode active material is SVO and the second cathode active material is CFₓ.

## Patentansprüche

1. Elektrochemische Zelle, umfassend:
a) ein Gehäuse;
b) eine Anode, die ein aktives Anodenmaterial umfasst;
c) eine Kathode, die einen ersten Stromabnehmer, eine erste Platte eines ersten aktiven Kathodenmaterials in entweder haftendem oder nicht-haftendem Kontakt mit dem ersten Stromabnehmer, und in nicht-haftendem Kontakt mit einer ersten Platte eines zweiten aktiven Kathodenmaterials umfasst, wobei der nicht-haftende Kontakt als direkter physikalischer Kontakt gekennzeichnet ist, der frei von molekularen Kräften, ausgewählt aus der Gruppe, bestehend aus chemischen Bindungen, Wasserstoffbrückenbindungen und van der Waals Kräften, zwischen dem Stromabnehmer und den aktiven Kathodenmaterialplatten, je nach Lage des Falles;
d) ein Separator, der zwischen der Anode und der Kathode liegt, um einen direkten physikalischen Kontakt zwischen diesen zu verhindern; und
e) ein Elektrolyt, der die Kathode und die Anode aktiviert.

2. Elektrochemische Zelle nach Anspruch 1, wobei die erste Platte des ersten aktiven Kathodenmaterials deckungsgleich zu der ersten Platte des zweiten aktiven Kathodenmaterials ist.

3. Elektrochemische Zelle nach Anspruch 1 oder Anspruch 2, wobei die erste Platte des ersten aktiven Kathodenmaterials durch Perforationen in dem ersten Stromabnehmer in nicht-haftendem Kontakt mit der ersten Platte des zweiten aktiven Kathodenmaterials ist.

4. Elektrochemische Zelle nach Anspruch 1 oder Anspruch 2, wobei die erste Platte des ersten aktiven Kathodenmaterials in einem nebeneinander gelagerten Anordnungsverhältnis in nicht-haftendem Kontakt mit der ersten Platte des zweiten aktiven Kathodenmaterials ist.

5. Elektrochemische Zelle nach einem der Ansprüche 1 bis 4, die ferner einen Separator umfasst, der die Kathode umhüllt und den nicht-haftenden Kontakt der ersten Platte des ersten aktiven Kathodenmaterials mit der ersten Platte des zweiten aktiven Kathodenmaterials aufrechterhält.

6. Elektrochemische Zelle nach einem der Ansprüche 1 bis 5, wobei das Gehäuse aus beabstandeten, im Wesentlichen parallelen Seitenwänden besteht, die eine Kraft auf den ersten Stromabnehmer, der zwischen der ersten Platte des ersten aktiven Kathodenmaterials und der ersten Platte des zweiten aktiven Kathodenmaterials liegt, ausüben, wodurch der nicht-haftende Kontakt der ersten Platte des ersten aktiven Kathodenmaterials mit der ersten Platte des zweiten aktiven Kathodenmaterials aufrechterhalten wird.

7. Elektrochemische Zelle nach einem der Ansprüche 1 bis 6, die ferner einen zweiten Stromabnehmer umfasst und wobei eine zweite Platte des ersten aktiven Kathodenmaterials in entweder haftendem oder nicht-haftendem Kontakt mit dem zweiten Stromabnehmer und in nicht-haftendem und deckungsgleichem Kontakt mit der ersten Platte des zweiten aktiven Kathodenmaterials ist.

8. Elektrochemische Zelle, umfassend:
a) ein Gehäuse;
b) eine Anode, die ein aktives Anodenmaterial umfasst;
c) eine Kathode, die einen ersten Stromabnehmer, eine erste und eine zweite Platte eines ersten aktiven Kathodenmaterials in Kontakt mit dem ersten Stromabnehmer, einen zweiten Stromabnehmer, eine dritte und eine vierte Platte des ersten aktiven Kathodenmaterials in Kontakt mit dem zweiten Stromabnehmer, und eine erste Platte eines zweiten aktiven Kathodenmaterials in nicht-haftendem Kontakt mit der zweiten und der dritten Platte des ersten aktiven Kathodenmaterials umfasst, wobei der nicht-haftende Kontakt als direkter physikalischer Kontakt gekennzeichnet ist, der frei von molekularen Kräften, ausgewählt aus der Gruppe, bestehend aus chemischen Bindungen, Wasserstoffbrückenbindungen und van der Waals Kräften, zwischen dem Stromabnehmer und den aktiven Kathodenmaterialplatten, je nach Lage des Falles;
d) ein Separator, der zwischen der Anode und der Kathode liegt, um einen direkten physikalischen Kontakt zwischen diesen zu verhindern; und
e) ein Elektrolyt, der die Kathode und die Anode aktiviert.

9. Elektrochemische Zelle nach Anspruch 8, wobei die erste und die zweite Platte des ersten aktiven Kathodenmaterials in haftendem Kontakt mit dem ersten Stromabnehmer sind und die dritte und die vierte Platte des ersten aktiven Kathodenmaterials in haftendem Kontakt mit dem zweiten Stromabnehmer sind.

10. Elektrochemische Zelle nach Anspruch 8 oder Anspruch 9, die ferner einen Separator umfasst, der die Kathode umhüllt und den nicht-haftenden Kontakt der ersten Platte des zweiten aktiven Kathodenmaterials mit der zweiten und der dritten Platte des ersten aktiven Kathodenmaterials aufrechterhält.

11. Elektrochemische Zelle nach einem der Ansprüche 8 bis 10, wobei das Gehäuse aus beabstandeten, im Wesentlichen parallelen Seitenwänden besteht, die eine Kraft auf die zweite Platte des ersten aktiven Kathodenmaterials, die dritte Platte des ersten aktiven Kathodenmaterials und die erste Platte des zweiten aktiven Kathodenmaterials ausüben, wodurch der nicht-haftende Kontakt der ersten Platte des zweiten aktiven Kathodenmaterials mit der zweiten und der dritten Platte des ersten aktiven Kathodenmaterials aufrechterhalten wird.

12. Elektrochemische Zelle nach einem der Ansprüche 1 bis 11, wobei das erste aktive Kathodenmaterial ein Kathodenmaterial mit relativ hohem Leistungsgrad und niedriger Energiedichte ist und das zweite aktive Kathodenmaterial ein Kathodenmaterial mit relativ niedrigem Leistungsgrad und hoher Energiedichte ist.

13. Elektrochemische Zelle nach einem der Ansprüche 1 bis 12, wobei das erste aktive Kathodenmaterial ein Kathodenmaterial mit relativ hohem Leistungsgrad und niedriger Energiedichte ist, ausgewählt aus der Gruppe, bestehend aus Silbervanadiumoxid (SVO), Kupfersilbervanadiumoxid, V₂O₅, MnO₂, LiCoO₂, LiNiO₂, LiMn₂O₄, TiS₂, CuS, FeS, FeS₂, CuO, Kupfervanadiumoxid und Mischungen davon, und das zweite aktive Kathodenmaterial ein Kathodenmaterial mit relativ niedrigem Leistungsgrad und hoher Energiedichte ist, ausgewählt aus der Gruppe, bestehend aus fluoriertem Kohlenstoff, Ag₂O, Ag₂O₂, CuF, Ag₂CrO₄, MnO₂, SVO selbst und Mischungen davon.

14. Elektrochemische Zelle nach einem der Ansprüche 1 bis 13, wobei das erste aktive Kathodenmaterial SVO ist und das zweite aktive Kathodenmaterial CFₓ ist.

15. Verfahren zur Herstellung einer elektrochemischen Zelle, umfassend:
a) ein Bilden einer ersten Platte eines ersten aktiven Kathodenmaterials und einer ersten Platte eines zweiten aktiven Kathodenmaterials;
b) ein Setzen der ersten Platte des ersten aktiven Kathodenmaterials in entweder haftendem oder nicht-haftendem Kontakt mit einem ersten Stromabnehmer;
c) ein Setzen der ersten Platte des zweiten aktiven Kathodenmaterials in nicht-haftendem Kontakt mit dem ersten Stromabnehmer und nicht-haftendem Kontakt mit der ersten Platte des ersten aktiven Kathodenmaterials, wodurch eine Kathode gebildet wird, wobei der nicht-haftende Kontakt als direkter physikalischer Kontakt gekennzeichnet ist, der frei von molekularen Kräften, ausgewählt aus der Gruppe, bestehend aus chemischen Bindungen, Wasserstoffbrückenbindungen und van der Waals Kräften, zwischen dem Stromabnehmer und den aktiven Kathodenmaterialplatten, je nach Lage des Falles;
d) ein Zusammenbauen der Kathode mit einer Anode und einem dazwischenliegenden Separator, um eine Anode/Kathode-Anordnung zu bilden;
e) ein Einbauen der Anode/Kathode-Anordnung in ein Gehäuse, um den nicht-haftenden Kontakt der ersten Platte des ersten aktiven Kathodenmaterials mit der ersten Platte des zweiten aktiven Kathodenmaterials aufrechtzuerhalten; und
f) ein Aktivieren der Anode/Kathode-Anordnung mit einem Elektrolyten.

16. Verfahren nach Anspruch 15, ferner umfassend ein Umhüllen der Kathode mit einem Separator, der so dimensioniert ist, dass die erste Platte des ersten aktiven Kathodenmaterials in nicht-haftendem Kontakt mit der ersten Platte des zweiten aktiven Kathodenmaterials gehalten wird.

17. Verfahren nach Anspruch 15 oder Anspruch 16, ferner umfassend ein Setzen einer zweiten Platte des ersten aktiven Kathodenmaterials in entweder haftendem oder nicht-haftendem Kontakt mit einem zweiten Stromabnehmer und in nicht-haftendem Kontakt mit der ersten Platte des zweiten aktiven Kathodenmaterials.

18. Verfahren zur Herstellung einer elektrochemischen Zelle, umfassend:
a) ein Bilden einer ersten, einer zweiten, einer dritten und einer vierten Platte eines ersten aktiven Kathodenmaterials und einer ersten Platte eines zweiten aktiven Kathodenmaterials;
b) ein Setzen der ersten und der zweiten Platte des ersten aktiven Kathodenmaterials in haftendem Kontakt mit einem ersten Stromabnehmer und der dritten und der vierten Platte des ersten aktiven Kathodenmaterials in haftendem Kontakt mit einem zweiten Stromabnehmer;
c) ein Setzen der ersten Platte des zweiten aktiven Kathodenmaterials zwischen die zweite und die dritte Platte des ersten aktiven Kathodenmaterials und in nicht-haftendem Kontakt mit ihnen, wodurch eine Kathode gebildet wird, wobei der nicht-haftende Kontakt als direkter physikalischer Kontakt gekennzeichnet ist, der frei von molekularen Kräften, ausgewählt aus der Gruppe, bestehend aus chemischen Bindungen, Wasserstoffbrückenbindungen und van der Waals Kräften, zwischen dem Stromabnehmer und den aktiven Kathodenmaterialplatten, je nach Lage des Falles;
d) ein Zusammenbauen der Kathode mit einer Anode und einem dazwischenliegenden Separator, um eine Anode/Kathode-Anordnung zu bilden;
e) ein Einbauen der Anode/Kathode-Anordnung in ein Gehäuse, um den Kontakt der zweiten und der dritten Platte des ersten aktiven Kathodenmaterials mit der ersten Platte des zweiten aktiven Kathodenmaterials aufrechtzuerhalten; und
f) ein Aktivieren der Anode/Kathode-Anordnung mit einem Elektrolyten.

19. Verfahren nach Anspruch 18, ferner umfassend ein Einschließen der Kathode in einer Separatortasche, die so dimensioniert ist, dass der Kontakt der zweiten und der dritten Platte des ersten aktiven Kathodenmaterials mit der ersten Platte des zweiten aktiven Kathodenmaterials aufrechterhalten wird.

20. Verfahren nach einem der Ansprüche 15 bis 19, wobei das erste aktive Kathodenmaterial ein Kathodenmaterial mit relativ hohem Leistungsgrad und niedriger Energiedichte ist und das zweite aktive Kathodenmaterial ein Kathodenmaterial mit relativ niedrigem Leistungsgrad und hoher Energiedichte ist.

21. Verfahren nach einem der Ansprüche 15 bis 20, wobei das erste aktive Kathodenmaterial SVO ist und das zweite aktive Kathodenmaterial CFₓ ist.

## Revendications

1. Cellule électrochimique comprenant :
a) un boîtier,
b) une anode comprenant un matériau actif d'anode;
c) une cathode comprenant un premier collecteur de courant, une première feuille d'un premier matériau actif de cathode en contact adhérent ou non adhérent avec le premier collecteur de courant, et en en contact non adhérent avec une première feuille d'un second matériau actif de cathode, le contact non adhérent étant caractérisé en tant que contact physique direct qui est dépourvu de forces moléculaires sélectionnées parmi le groupe constitué par des liaisons chimiques, des liaisons d'hydrogène, et des forces de Van der Waals entre le collecteur de courant et les feuilles de matériau actif de cathode, le cas échéant,
d) un séparateur entre l'anode et la cathode pour empêcher un contact physique direct entre eux, et
e) un électrolyte activant l'anode et la cathode.

2. Cellule électrochimique selon la revendication 1, dans laquelle la première feuille du premier matériau actif de cathode est adapté à la première feuille du second matériau actif de cathode.

3. Cellule électrochimique selon la revendication 1 ou la revendication 2, dans laquelle la première feuille du premier matériau actif de cathode est en contact non adhérent avec la première feuille du second matériau actif de cathode à travers des perforations dans le premier collecteur de courant.

4. Cellule électrochimique selon la revendication 1 ou la revendication 2, dans laquelle la première feuille du premier matériau actif de cathode est en contact non adhérent avec la première feuille du second matériau actif de cathode dans une relation côte-à-côte.

5. Cellule électrochimique selon l'une quelconque des revendications 1 à 4, comprenant en outre un séparateur enveloppant la cathode et maintenant le contact non adhérent de la première feuille du premier matériau actif de cathode avec la première feuille du second matériau actif de cathode.

6. Cellule électrochimique selon l'une quelconque des revendications 1 à 5, dans laquelle le boîtier est constitué de parois latérales espacées sensiblement parallèles qui appliquent une force sur le premier collecteur de courant entre la première feuille du premier matériau actif de cathode et la première feuille du second matériau actif de cathode, de manière à maintenir le contact non adhérent de la première feuille du premier matériau actif de cathode avec la première feuille du second matériau actif de cathode.

7. Cellule électrochimique selon l'une quelconque des revendications 1 à 6, comprenant en outre un second collecteur de courant et dans laquelle une deuxième feuille du premier matériau actif de cathode est en contact adhérent ou non adhérent avec le second collecteur de courant et en contact non adhérent et adapté avec la première feuille du second matériau actif de cathode.

8. Cellule électrochimique comprenant:
a) un boîtier;
b) une anode comprenant un matériau actif d'anode :
c) une cathode comprenant un premier collecteur de courant, des première et deuxième feuilles d'un premier matériau actif de cathode en contact avec le premier collecteur de courant, un second collecteur de courant, des troisième et quatrième feuilles du premier matériau actif de cathode en contact avec le second collecteur de courant, et une première feuille d'un second matériau actif de cathode en contact non adhérent avec les deuxième et troisième feuilles du premier matériau actif de cathode, le contact non adhérent étant caractérisé en tant que contact physique direct qui est dépourvu de forces moléculaires sélectionnées parmi le groupe constitué par des liaisons chimiques, des liaisons d'hydrogène, et des forces de Van der Waals entre le collecteur de courant et les feuilles de matériau actif de cathode, le cas échéant,
d) un séparateur entre l'anode et la cathode pour empêcher un contact physique direct entre eux, et
e) un électrolyte activant l'anode et la cathode.

9. Cellule électrochimique selon la revendication 8, dans laquelle les première et deuxième feuilles du premier matériau actif de cathode sont en contact adhérent avec le premier collecteur de courant, et les troisième et quatrième feuilles du premier matériau actif de cathode sont en contact adhérent avec le second collecteur de courant.

10. Cellule électrochimique selon la revendication 8 ou la revendication 9, comprenant en outre un séparateur enveloppant la cathode et maintenant le contact non-adhérent de la première feuille du second matériau actif de cathode avec les deuxième et troisième feuilles du premier matériau actif de cathode.

11. Cellule électrochimique selon l'une quelconque des revendications 8 à 10, dans laquelle le boîtier est constitué de parois latérales espacées sensiblement parallèles qui appliquent une force à la deuxième feuille du premier matériau actif de cathode, à la troisième feuille du premier matériau actif de cathode, et à la première feuille du second matériau actif de cathode, de manière à maintenir le contact non adhérent de la première feuille du second matériau actif de cathode avec les deuxième et troisième feuilles du premier matériau actif de cathode.

12. Cellule électrochimique selon l'une quelconque des revendications 1 à 11, dans laquelle le premier matériau actif de cathode est un matériau de cathode à faible densité énergétique et à taux relativement élevé et le second matériau actif de cathode est un matériau de cathode à haute densité énergétique et à taux relativement faible.

13. Cellule électrochimique selon l'une quelconque des revendications 1 à 12, dans laquelle le premier matériau actif de cathode est un matériau de cathode à faible densité énergétique et à taux relativement élevé choisi dans le groupe constitué par l'oxyde de vanadium et d'argent (SVO), l'oxyde de vanadium, d'argent et de cuivre, V₂O₅, MnO₂, LiCoO₂, LiNiO₂, LiMn₂O₄, TiS₂, CuS, FeS, FeS₂, CuO, l'oxyde de vanadium et de cuivre, et des mélanges de ceux-ci, et le second matériau actif de cathode est un matériau de cathode à haute densité énergétique et à taux relativement faible choisi dans le groupe constitué par le carbone fluoré, Ag₂O, Ag₂O₂, CuF, Ag₂CrO₄, MnO₂, SVO lui-même, et des mélanges de ceux-ci.

14. Cellule électrochimique selon l'une quelconque des revendications 1 à 13, dans laquelle le premier matériau actif de cathode est SVO et le second matériau actif de cathode est CFₓ.

15. Procédé de fabrication d'une cellule électrochimique comprenant :
a) de former une première feuille d'un premier matériau actif de cathode et une première feuille d'un second matériau actif de cathode,
b) de placer la première feuille du premier matériau actif de cathode en contact adhérent ou non adhérent avec un premier collecteur de courant,
c) de placer la première feuille du second matériau actif de cathode en contact non adhérent avec le premier collecteur de courant et en contact non adhérent avec la première feuille du premier matériau actif de cathode, de manière à former une cathode, le contact non adhérent étant caractérisé en tant que contact physique direct qui est dépourvu de forces moléculaires sélectionné parmi le groupe constitué par des liaisons chimiques, des liaisons d'hydrogène, et des forces de Van der Waals entre le collecteur de courant et les feuilles de matériau actif de cathode, le cas échéant,
d) d'assembler la cathode avec une anode et un séparateur intermédiaire afin de former un ensemble d'anode / cathode,
e) de loger l'ensemble anode / cathode dans un boîtier afin de maintenir le contact non adhérent de la première feuille du premier matériau actif de cathode avec la première feuille du second matériau actif de cathode, et
f) d'activer l'ensemble anode / cathode avec un électrolyte.

16. Procédé selon la revendication 15, comprenant en outre d'envelopper la cathode dans un séparateur dimensionné pour maintenir la première feuille du premier matériau actif de cathode en contact non adhérent avec la première feuille du second matériau actif de cathode.

17. Procédé selon la revendication 15 ou la revendication 16, comprenant en outre de placer une deuxième feuille du premier matériau actif de cathode en contact adhérent ou non adhérent avec un second collecteur de courant et en contact non adhérent avec la première feuille du second matériau actif de cathode.

18. Procédé de fabrication d'une cellule électrochimique comprenant :
a) de former des première, deuxième, troisième et quatrième feuilles d'un premier matériau actif de cathode et une première feuille d'un second matériau actif de cathode,
b) de placer les première et deuxième feuilles du premier matériau actif de cathode en contact adhérent avec un premier collecteur de courant, et les troisième et quatrième feuilles du premier matériau actif de cathode en contact adhérent avec un second collecteur de courant,
c) de placer la première feuille du second matériau actif de cathode à une position intermédiaire et en contact non adhérent avec les deuxième et troisième feuilles du premier matériau actif de cathode, de manière à former une cathode, le contact non adhérent étant caractérisé en tant que contact physique direct qui est dépourvu de forces moléculaires sélectionnés parmi le groupe constitué par des liaisons chimiques, des liaisons d'hydrogène, et des forces de Van der Waals entre le collecteur de courant et les feuilles de matériau actif de cathode, le cas échéant,
d) d'assembler la cathode avec une anode et un séparateur intermédiaire afin de former un ensemble d'anode / cathode,
e) de loger l'ensemble d'anode / cathode dans un boîtier pour maintenir le contact des deuxième et troisième feuilles du premier matériau actif de cathode avec la première feuille du second matériau actif de cathode, et
f) d'activer l'ensemble d'anode / cathode avec un électrolyte.

19. Procédé selon la revendication 18, comprenant en outre d'englober la cathode dans un sac de séparation dimensionné pour maintenir le contact des deuxième et troisième feuilles du premier matériau actif de cathode avec la première feuille du second matériau actif de cathode.

20. Procédé selon l'une quelconque des revendications 15 à 19, dans lequel le premier matériau actif de cathode est un premier matériau de cathode à faible densité énergétique et à taux relativement élevé et le second matériau actif de cathode est un matériau de cathode à haute densité énergétique et à taux relativement faible.

21. Procédé selon l'une quelconque des revendications 15 à 20, dans lequel le premier matériau actif de cathode est SVO et le second matériau actif de cathode est CFₓ.
